(19) Europäisches Patentamt / European Patent Office / Office européen des brevets

(11) **EP 2 141 460 A2**

(12) **EUROPÄISCHE PATENTANMELDUNG**

(43) Veröffentlichungstag:
**06.01.2010 Patentblatt 2010/01**

(51) Int Cl.:
***G01D 5/14*** *(2006.01)*

(21) Anmeldenummer: **09008449.2**

(22) Anmeldetag: **29.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **30.06.2008 DE 102008030299**

(71) Anmelder: **Hirschmann Automotive GmbH**
**6830 Rankweil-Brederis (AT)**

(72) Erfinder: **Dengler, Werner**
**6714 Nüziders (AT)**

(74) Vertreter: **Greif, Thomas**
**Thul Patentanwaltsgesellschaft mbH**
**Rheinmetall Platz 1**
**40476 Düsseldorf (DE)**

(54) **Linearwegmessung bei einem AGR-Ventil**

(57) Die Erfindung betrifft eine Einrichtung zur Messung der Position eines linear beweglichen Elements (2) zur Steuerung von Bauteilen, insbesondere zur Messung der Stellung eines Ventilkolbens (1) eines Bypassventils eines Abgasrückführsystems (auch AGR genannt), wobei das linear bewegliche Element (2) mit Hilfe einer Vorrichtung, vorzugsweise eines Elektromotors unter Zwischenschaltung eines Getriebes und einer Schwinge (3), oder eines pneumatischen, hydraulischen oder elektromagnetischen Stellers in beide Bewegungsrichtungen verschiebbar ist, wobei erfindungsgemäß vorgesehen ist, dass zur Ermittlung der Position des linear beweglichen Elements (2) ein Magnet und ein Hall-Sensor (5) oder ein spinsensitives magnetischen Sensorelement zur Anwendung kommen.

FIG. 1

EP 2 141 460 A2

**Beschreibung**

Die Erfindung bezieht sich auf eine Einrichtung zur Messung der Position eines linear beweglichen Elements zur Steuerung von Bauteilen, insbesondere zur Messung der Stellung eines Ventilkolbens eines Bypassventils eines Abgasrückführsystems (auch AGR genannt), wobei das linear bewegliche Element mit Hilfe einer Vorrichtung, vorzugsweise eines Elektromotors unter Zwischenschaltung eines Getriebes und einer Schwinge oder eines pneumatischen, hydraulischen oder elektromagnetischen Stellers, in beide Bewegungsrichtungen verschiebbar ist.

Ein derartiges Abgasrückführsystem mit Bypassventil ist allgemein bekannt. Das Bypassventil regelt die Luft- und Abgaszufuhr zum Einlasssystem von Brennkraftmaschine. Das Bypassventil weist einen Kolben auf, der über eine Schubstange als linear bewegliches Element verschoben werden kann. Die Schubstange wiederum wird über einen Elektromotor und ein Getriebe angesteuert, wobei am Ausgang des Getriebes eine Schwinge vorgesehen ist, die mit der Schubstange verbunden ist. Die Messung der Position des linear beweglichen Elements erfolgt über Rotationssensoren, die den Winkel des Abtriebsrades, das mit der Schwinge in Wirkverbindung steht, messen.

Nachteilig dabei ist, dass baubedingte Toleranzen, wie auch Verbautoleranzen, des Antriebs- und Messsystems die Qualität des Messergebnisses beeinflussen bzw. verschlechtern, da es sich hierbei um eine indirekte Messung handelt.

Aufgabe der Erfindung ist es, eine Einrichtung zur Messung der Position eines linear beweglichen Elements zur Verfügung zu stellen, das die direkte Position des beweglichen Bauteiles misst, damit Toleranzen eliminiert werden können. Die Einrichtung soll kalibrierbar und zudem unempfindlich gegenüber hohen Temperaturen und extremen Temperaturunterschieden sein. Die Einrichtung soll unabhängig von dem Bypassventil eines Abgasrückführsystems auch für beliebige Verstellsysteme, z. B. im Motorenbereich, insbesondere Abgasbereich, sowie im Achsbereich und Antriebsstrang von Kraftfahrzeugen, anwendbar sein.

Die Aufgabe der Erfindung wird dadurch gelöst, dass zur Ermittlung der Position des linear beweglichen Elements ein Magnet und ein zugeordneter Hall-Sensor zur Anwendung kommen. Durch diese Ausgestaltung wird erreicht, dass die Position des linear beweglichen Elements direkt gemessen wird und dass dadurch Toleranzen in der Übertragung oder auch Toleranzen bezüglichen des Einbaus der Einrichtung entfallen.

In vorteilhafter Weise sind der Magnet am linear beweglichen Element und der Hall-Sensor ortsfest, vorzugsweise an einer Platine, in Wirknähe zueinander, befestigt. Dadurch ist der Hall-Sensor dem Magnetfeld des Magneten zugeordnet.

In vorteilhafter Weise ist dabei der Magnet als Stabmagnet ausgebildet und axial magnetisiert ausgerichtet. Der Stabmagnet ist so ausgebildet und dimensioniert, dass seine Feldlinien im Wesentlichen längs des linear beweglichen Elements, vorzugsweise annähernd kreisförmig von Nord nach Süd, verlaufen. Durch diese Ausbildung und Anordnung des Stabmagneten direkt auf dem linear beweglichen Element erfasst der Hell-Sensor die exakte Position des linear beweglichen Elements, so dass mechanische Toleranzen im Getriebe, der Schwinge usw. aus der Toleranzkette entfallen. Eine axiale Magnetisierung ist allerdings nicht zwingend erforderlich, wenn der Magnet oder der Positionsgeber, insbeosndere das Magnettarget, so aufgebaut ist, dass eine lineare Bewegung des beweglichen Elements auch eine Änderung der Winkellage der Feldlinien bewirkt. Dies ist zum beispiel bei sogenannten E-Gas-Systemen in Fahrzeugen der Fall.

In Weiterbildung der Erfindung ist der Stabmagnet so ausgebildet und dimensioniert , dass die Feldlinien im Wesentlichen längs des linear beweglichen Elements von Nord nach Süd verlaufen, vorzugsweise annähernd kreisförmig verlaufen. Damit lässt sich ein besonders genaues Ausgangssignal des Sensors in Abhängigkeit von der zu erfassenden Bewegung des Messobjektes erzeugen.

Der Antrieb des Bauteils, insbesondere des Ventliskolbens, kann dabei, wie bisher, über das linear bewegliche Element durch einen DC-Motor mit Planetengetriebe erfolgen, wobei eine Schwinge am Ende des Planetengetriebes die Rotationsbewegung in eine translatorische Bewegung umwandelt. Die tranlatorische Bewegung kann auch durch pneumatische, hydraulische oder elektromagnetische Steller direkt erzeugt werden.

In weiterer Ausgestaltung der Erfindung wird vorgeschlagen, dass der Hall-Sensor als so genannter Triaxis-Sensor oder Jeder anderen Art von spinsensitiven Magnetsensoren ausgebildet ist. Er ist zur Messung aller drei Feldkomponenten, Bx, By und Bz, und zur Berechnung der Winkel der Feldlinien zueinander ausgebildet. Um die Position des Stabmagneten zu messen, reicht es jedoch aus, wenn vom Hall-Sensor zwei Komponenten ausgewertet werden, z.B. By und Bz, oder auch By und Bx oder auch Bx und Bz. Dabei ergibt sich folgender beispielhafter Zusammenhang:

$$X_{pos} = m^* \arctan (By/Bx)$$

Die Formel in Worten: $X_{pos}$ (das heisst die Position des Ventilkobens bzw. des linear beweglichen Elementes, zum Beispiel eine Schubstange) ist gleich dem Produkt von einem Wert "m" und dem Arcus-Tangens des Verhältnisses aus By und Bx. Durch die Berechnung des Verhältnisses zum Beispiel von By und Bx werden Temperatur und mechanische Änderungen minimiert. Der Wert "m" kann gleich 1 sein, wobei es auch denkbar ist, dass dieser Wert ungleich 1 (größer oder kleiner 1) ist und als Korrektur- oder Linearisierungswert zum Beispiel konstruktive oder bauliche Toleranzen ausgleicht oder auch bewirkt, dass die von dem Sensor ausgegebenen Signalwerte, die eigentlich aufgrund der Bewegung des Meßobjektes (insbesondere des Ventilkolbens oder der Schubstange) eine rotatorische Bewegung repräsentieren, in eine lineare Signalfolge (ansteigende oder fallende Ausgangskennlinie) umgewandelt werden. Dieser Linearisierungswert kann über den gesamten Meßweg gleich oder auch veränderbar (zum Biespiel exponentiell) sein. Vorzugsweise wird dieser Wert "m" in einer Speichereinheit abgespeichert und zum Beispiel in Abhängigkeit der Position des Ventilkobens bzw. des linear beweglichen Elementes, zum Beispiel eine Schubstange, aus einer Tabelle oder einer Matrix entnommen.

Die Einrichtung lässt sich so für Arbelstemperaturberelche bis 160° C und für große Temperaturunterschiede einsetzen. Die Messgenauigkeit beträgt ca. 0,1 mm. Die mechanischen Toleranzen sind, wie bereits erläutert, vernachlässigbar, da direkt am Bauteil bzw. dessen Bewegungselement, gemessen wird. Die Einrichtung ist kalibrierbar und weist eine Langzeitstabilität auf, da Alterung des Magneten das Ergebnis nicht beeinflusst.

Zur welteren Erläuterung der Erfindung wird auf Zeichnung verwiesen, in der ein Ausführungsbeispiel der Erfindung vereinfacht dargestellt ist.

Es zeigt:

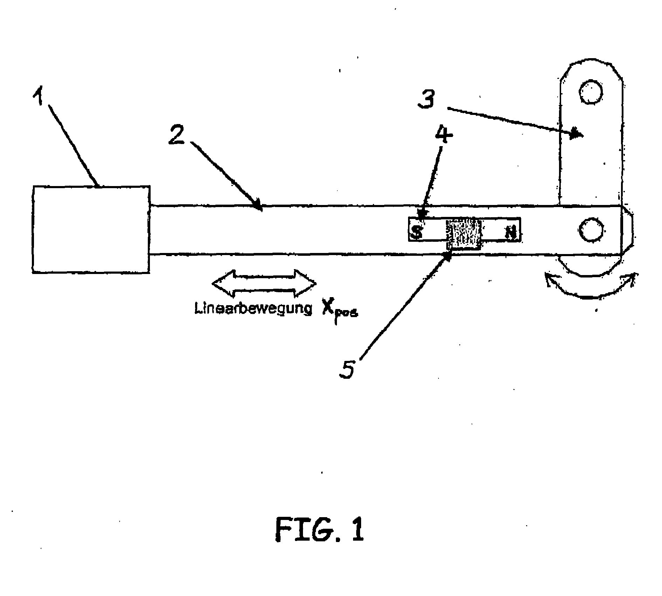

Figur 1:    eine skizzierte Seitenansicht einer Einrichtung zur Messung der Stellung eines Ventilkolbens eines Bypassventils.

In Figur 1 ist mit 1 ein Ventilkolben eines Bypassventils bezeichnet, der nicht näher dargestellt, innerhalb eines Ventilgehäuses angeordnet ist und die Zufuhr von Luft und Abgas in das Einlasssystem einer Brennkraftmaschine steuert. Der Ventilkolben 1 ist mit einem als Schubstange ausgebildeten linear beweglichen Element 2 verbunden. Das linear bewegliche Element 2 ist aus einem nicht ferromagnetischen Material hergestellt, um den Magnetismus des Magneten nicht zu stören. Am freien Ende des linear beweglichen Elements 2 ist eine Schwinge 3 angeordnet, die mit dem linear beweglichen Element, z.B. über einen Bolzen, verbunden ist. Die Schwinge 3 ist, nicht dargestellt, Bestandteil eines Getriebes, insbesondere Planetengetriebes, das von einem Elektromotor, insbesondere DC-Motor, beherrscht wird. An dem linear beweglichen Element 2 ist ein mit 4 bezeichneter Stabmagnet befestigt, der axial magnetisiert ist. Dem Stabmagnet 4 zugeordnet ist ein mit 5 bezeichneter Hall-Sensar, der so positioniert ist, dass er die Feldkomponenten des Stabmagneten messen kann. Der Hall-Sensor 5 ist ortsfest, insbesondere an einer Platine angeordnet. Der Hall-Sensor 5 kann, wie in der allgemeinen Beschreibung erläutert, die Position des Stabmagneten genau ermitteln, so dass die Position des Ventilkolbens 1 oder eines sonstigen Bauteils, bei andersartigem Einsatz der Einrichtung, genau festgestellt werden kann und als Signal für die Steuerung zur Verfügung steht.

Bezugszeichenllste

1    Ventilkolben
2    linear bewegliches Element
3    Schwinge
4    Stabmagnet
5    HALL-Sensor

**Patentansprüche**

1.  Einrichtung zur Messung der Position eines linear beweglichen Elements (2) zur Steuerung von Bauteilen, insbesondere zur Messung der Stellung eines Ventilkolbens (1) eines Bypassventils eines Abgasrückführsystems (auch AGR genannt), wobei das linear bewegliche Element (2) mit Hilfe einer Vorrichtung, vorzugsweise eines Elektromotors unter Zwischenschaltung eines Getriebes und einer Schwinge (3) oder eines pneumatischen, hydraulischen oder elektromagnetischen Stellers, in beide Bewegungsrichtungen verschiebbar ist, **dadurch gekennzeichnet, dass** zur Ermittlung der Position des linear beweglichen Elements (2) ein Magnet und ein Hall-Sensor (5) oder ein spinsensitives magnetisches Sensorelement zur Anwendung kommen.

2.  Einrichtung nach Anspruch 1, **dadurch gekennzeichnet, dass** der Magnet am linear beweglichen Element (2) und der Hall-Sensor (5) ortsfest, vorzugsweise an einer Platine, in Wirknähe zueinander angeordnet, befestigt sind.

3.  Einrichtung nach einem der Ansprüche 1 oder 2, **dadurch gekennzeichnet dass** der Magnet als Stabmagnet (4) ausgebildet und axial magnetisiert ausgerichtet ist.

4.  Einrichtung nach einem der vorhergehenden Ansprüche, **dadurch gekennzeichnet, dass** der Stabmagnet (4) so ausgebildet und dimensioniert ist, dass die Feldlinien im Wesentlichen längs des linear beweglichen Elements (2) von Nord nach Süd verlaufen.

5.  Einrichtung nach einem der vorhergehenden Ansprüche, **dadurch gekennzeichnet, dass** der Hall-Sensor als so genannter Triaxis-Sensor ausgebildet ist.

6.  Einrichtung nach einem der vorhergehenden Ansprüche, **dadurch gekennzeichnet dass** der Hall-Sensor zur Messung aller drei Feldkomponenten, Bx, By und Bz und zur Berechnung der Winkel der Feldlinien zueinander ausgelegt ist.

**FIG. 1**

Linearbewegung X$_{pos}$